# EUROPEAN PATENT APPLICATION

(11) **EP 4 513 662 A1**
(43) Date of publication of application: **26.02.2025**
(21) Application number: 23890368.6
(22) Date of filing: 08.09.2023
(51) Int. Cl.: H01M 50/572, H01M 50/531, H01M 50/102, H01M 50/116, H01M 50/14, H01M 10/04

(54) **BATTERY AND ELECTRONIC DEVICE**

(30) Priority: 15.11.2022 CN 202223051307 U
(71) Applicant: Zhuhai CosMX Battery Co., Ltd., Zhuhai, Guangdong 519180 (CN)
(72) Inventor: LIN, Yongtao, Zhuhai, Guangdong 519180 (CN); XIONG, Jiageng, Zhuhai, Guangdong 519180 (CN); XIE, Jichun, Zhuhai, Guangdong 519180 (CN)
(74) Representative: Vossius & Partner Patentanwälte Rechtsanwälte mbB
(86) International application number: PCT/CN2023/117838
(87) International publication number: WO 2024/103931

(57) **Abstract**

A battery and an electronic device. The battery includes a battery cell, a housing, an insulating member and a connecting sheet, where the housing is provided with an accommodating cavity, and the battery cell is disposed in the accommodating cavity; a side wall of the housing is provided with a notch, the insulating member is mounted at the notch, and the insulating member is provided with a mounting hole; the connecting sheet is disposed on the insulating member and is provided with a protruding part, the protruding part penetrates through the mounting hole and extends to inside of the housing, and the protruding part is electrically connected with a tab assembly of the battery cell. The electronic device includes the battery. Capacity density of the battery is improved without changing the size of the battery.

## Description

The present application claims priority to Chinese Patent Application No. 2022230513073, entitled "BATTERY AND ELECTRONIC DEVICE", filed with China National Intellectual Property Administration on November 15, 2022, which is hereby incorporated by reference in its entirety.

### TECHNICAL FIELD

The present invention relates to the field of new energy and, in particular, to a battery and an electronic device.

### BACKGROUND

Battery is a device that converts chemical energy into electrical energy, which is widely used in life. With the development of battery industry, the requirements for battery performance are getting higher and higher.

An existing battery generally includes a battery cell, a housing, an insulating member and a pole. The battery cell is disposed inside the housing, and the housing is used for protecting the battery cell. The pole extends from the outside of the housing into the inside of the housing to be electrically connected with the tab of the battery cell, so that electrical charges of the battery cell are extended to the outside of the housing for convenient use. The insulating member is disposed between the inner side and the outer side of the housing and between the housing and the pole.

However, existing pole, insulating member and the like themselves occupy large spaces, reducing a volume of the battery cell inside the housing and capacity density of the battery.

### SUMMARY

In order to solve at least one of the problems mentioned in the background, the present invention provides a battery and an electronic device, improving capacity density of the battery.

In order to achieve the above purpose, the present invention provides the following technical solutions.

In a first aspect, the present invention provides a battery, including a battery cell, a housing, an insulating member and a connecting sheet, where the housing is provided with an accommodating cavity, and the battery cell is disposed in the accommodating cavity; a side wall of the housing is provided with a notch, the insulating member is mounted at the notch, and the insulating member is provided with a mounting hole; the connecting sheet is disposed on the insulating member and is provided with a protruding part, the protruding part penetrates through the mounting hole and extends to inside of the housing, and the protruding part is electrically connected with a tab assembly of the battery cell.

As an optional implementation, a side of the insulating member away from the housing is provided with a mounting groove, the mounting hole is located at a bottom of the mounting groove, and the connecting sheet is disposed in the mounting groove and covers the mounting hole.

As an optional implementation, a shape of the insulating member is matched with a shape of the notch, and the insulating member is clamped at the notch.

As an optional implementation, edges of both opposite sides of the insulating member are provided with sliding grooves, and the insulating member is clamped into the notch through the sliding grooves.

As an optional implementation, a thickness of a central region of the insulating member is less than a thickness of the edges of the insulating member where the sliding grooves are provided.

As an optional implementation, a welding area is formed between a top of the connecting sheet and a groove wall of the mounting groove, and the connecting sheet and the insulating member are welded together at the welding area.

As an optional implementation, a top surface of the connecting sheet does not exceed a top surface of the insulating member.

As an optional implementation, the tab assembly includes a tab, and a bottom of the protruding part abuts against a surface of the tab.

As an optional implementation, the tab assembly includes a tab and an overcurrent protection element, and the overcurrent protection element is connected between the tab and the protruding part.

As an optional implementation, the battery cell is coated with a packaging housing, and a tab of the battery cell extends out of the packaging housing.

As an optional implementation, the tab is disposed on the battery cell, the packaging housing includes a body and a sealing edge extending outwards from an edge of a side of the body, a side of the packaging housing facing the tab is provided with an opening, and the sealing edge is bent in a direction close to the body; the tab extends out of the packaging housing from the opening along a bending direction of the sealing edge.

As an optional implementation, the battery further includes a heat dissipation layer, where the heat dissipation layer is disposed between adjacent wall surfaces of the packaging housing and the housing.

As an optional implementation, the housing is a metal housing, and the insulating member is a plastic member.

As an optional implementation, the battery cell is of a wound structure or a laminated structure.

As an optional implementation, the notch is rectangular in shape.

As an optional implementation, the housing is formed by a combination of two housing parts.

As an optional implementation, the mounting hole is circular or rectangular in shape.

As an optional implementation, the mounting hole is provided at a geometric center of the insulating member.

As an optional implementation, the heat dissipation layer is a heat dissipation coating adhesive.

In a second aspect, the present invention further provides an electronic device, including any battery according to the first aspect.

The battery provided by the present invention includes a battery cell, a housing, an insulating member and a connecting sheet, where the housing is provided with an accommodating cavity, and the battery cell is disposed in the accommodating cavity; a side wall of the housing is provided with a notch, the insulating member is mounted at the notch, and the insulating member is provided with a mounting hole; the connecting sheet is disposed on the insulating member and is provided with a protruding part, the protruding part penetrates through the mounting hole and extends to inside of the housing, and the protruding part is electrically connected with a tab assembly of the battery cell. According to the battery provided by the present invention, the notch is formed in the side wall of the housing, and the insulating member is directly disposed at the notch. In this way, the insulating member in the present application can not only act as a part of the housing to play the role of protection and support, but also play the role of isolating the connecting sheet from the housing. The mounting hole is then formed in the insulating member, and the connecting sheet is disposed on the insulating member. The connecting sheet is provided with the protruding part, and the protruding part penetrates through the mounting hole and extends to inside of the housing. The connecting sheet is electrically connected with the tab assembly. With this arrangement, the insulating member and the connecting sheet occupy a small part of the internal space of the housing, leaving a large space for the setting of the battery cell. Therefore, capacity density of the battery is improved without changing the overall size of the battery.

### BRIEF DESCRIPTION OF DRAWINGS

In order to explain embodiments of the present invention or the technical solutions in the prior art more clearly, the following will make a brief introduction to the drawings needed for the description of the embodiments or the prior art. Apparently, the drawings in the following description are merely a part of embodiments of the present invention. For persons of ordinary skill in the art, it is also possible to obtain other drawings from these drawings without paying creative labor.
FIG. 1 is a schematic diagram of an overall structure of a battery according to an embodiment of the present invention.
FIG. 2 is an exploded view of FIG. 1.
FIG. 3 is a side view of FIG. 1.
FIG. 4 is a section view taken along line A-A of FIG. 3.
FIG. 5 is an enlarged view of portion B in FIG. 4.
FIG. 6 is a schematic diagram of an overall structure of an insulating member in a battery according to an embodiment of the present invention.
FIG. 7 is a side view of FIG. 6.
FIG. 8 is a schematic diagram of a connecting sheet in a battery according to an embodiment of the present invention.
FIG. 9 is a side view of FIG. 8.

Description of reference numerals:
100-battery;
110-battery cell;
111-tab assembly;
1111-tab;
1112-overcurrent protection element;
120-housing;
121-notch;
130-insulating member;
131-mounting hole;
132-mounting groove;
133-sliding groove;
140-connecting sheet;
141-protruding part;
150-packaging housing.

### DESCRIPTION OF EMBODIMENTS

The following clearly and comprehensively describes the technical solutions in embodiments of the present invention with reference to the accompanying drawings in embodiments of the present invention. Apparently, the described embodiments are merely a part of rather than all embodiments of the present invention. All other embodiments obtained by persons of ordinary skill in the art based on embodiments of the present invention without creative labor belong to the protection scope of the present invention.

In this application, the terms "above/on", "below", "left", "right", "front", "back", "top", "bottom", "inner", "outer", "vertical", "horizontal", "lateral", "longitudinal", etc., indicate the orientation or positional relationship based on the orientation or positional relationship shown in the drawings. These terms are used primarily to better describe the present invention and embodiments therein, and are not intended to limit that the devices, elements or components referred to must have a specific orientation, or be constructed or operated in a specific orientation.

Moreover, some of the above terms may be used to indicate other meanings in addition to the orientation or positional relationship. For example, the term "on" may also be used to indicate a certain kind of attachment or connection relationship in some cases. For those of ordinary skill in the art, the specific meaning of the above terms in the present invention can be understood according to specific situations.

Furthermore, the terms "mounted", "disposed", "provided," "connected", "connecting" should be understood broadly. For example, it can be a fixed connection, a detachable connection, or an integral construction; it can be a mechanical connection, or an electrical connection; it can be a direct connection, an indirect connection through an intermediary, or an internal communication between two devices, elements or components. For those of ordinary skill in the art, the specific meaning of the above terms in the present invention can be understood according to specific situations.

Furthermore, the terms "first", "second", etc., are used primarily to distinguish between different devices, elements, or components (which may be of the same or different specific types and configurations), and are not intended to indicate or imply the relative importance or number of the devices, elements, or components referred to. "A plurality of" means two or more, unless otherwise clearly defined.

An existing battery generally includes a battery cell, a housing, an insulating member and a pole. The battery cell is disposed inside the housing, and the housing is used for protecting the battery cell. The pole extends from the outside of the housing into the inside of the housing to be electrically connected with the tab of the battery cell, so that electrical charges of the battery cell are extended to the outside of the housing for convenient use. The insulating member is disposed between the inner side and the outer side of the housing and between the housing and the pole. However, existing pole, insulating member and the like themselves occupy large spaces, reducing a volume of the battery cell inside the housing and capacity density of the battery.

In view of this, the present invention provides a battery. The battery includes a battery cell, a housing, an insulating member and an connecting sheet, where the housing is provided with an accommodating cavity, and the battery cell is disposed in the accommodating cavity; a side wall of the housing is provided with a notch, the insulating member is mounted at the notch, and the insulating member is provided with a mounting hole; the connecting sheet is disposed on the insulating member and is provided with a protruding part, the protruding part penetrates through the mounting hole and extends to inside of the housing, and the protruding part is electrically connected with a tab assembly of the battery cell. According to the battery provided by the present invention, the notch is formed in the side wall of the housing, and the insulating member is directly disposed at the notch. In this way, the insulating member in the present application can not only act as a part of the housing to play the role of protection and support, but also play the role of isolating the connecting sheet from the housing. The mounting hole is then formed in the insulating member, and the connecting sheet is disposed on the insulating member. The connecting sheet is provided with the protruding part, and the protruding part penetrates through the mounting hole and extends to inside of the housing. The connecting sheet is electrically connected with the tab assembly. With this arrangement, the insulating member and the connecting sheet occupy a small part of the internal space of the housing, leaving a large space for the setting of the battery cell. Therefore, capacity density of the battery is improved without changing the overall size of the battery.

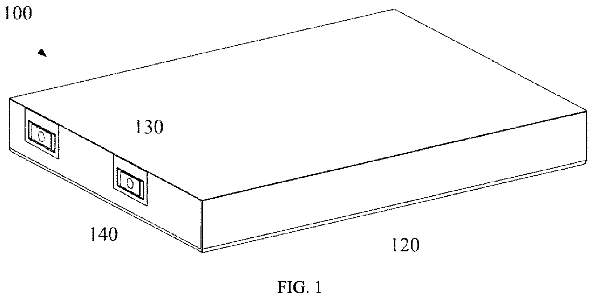

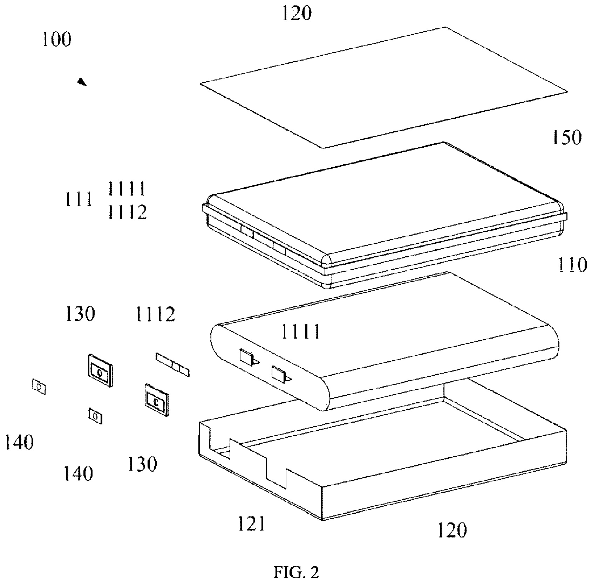

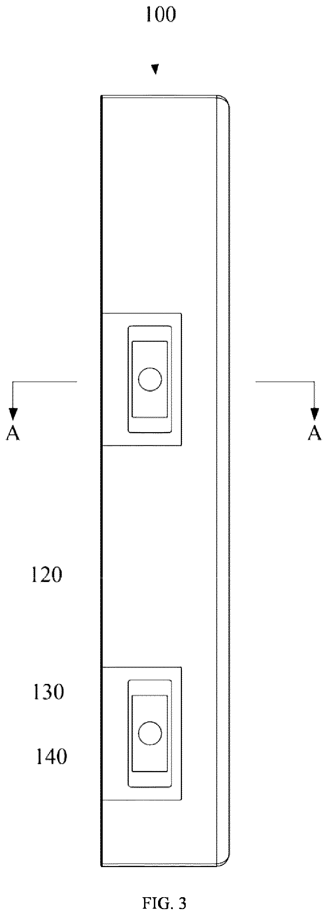

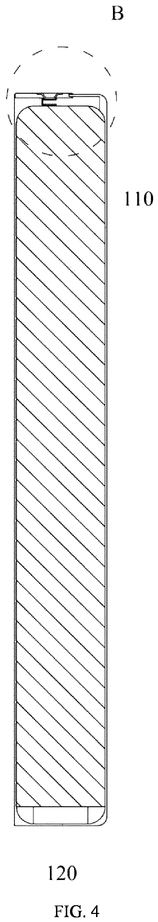

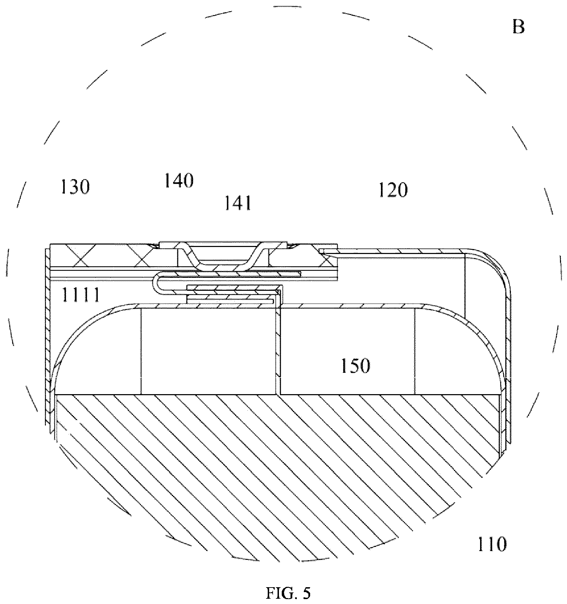

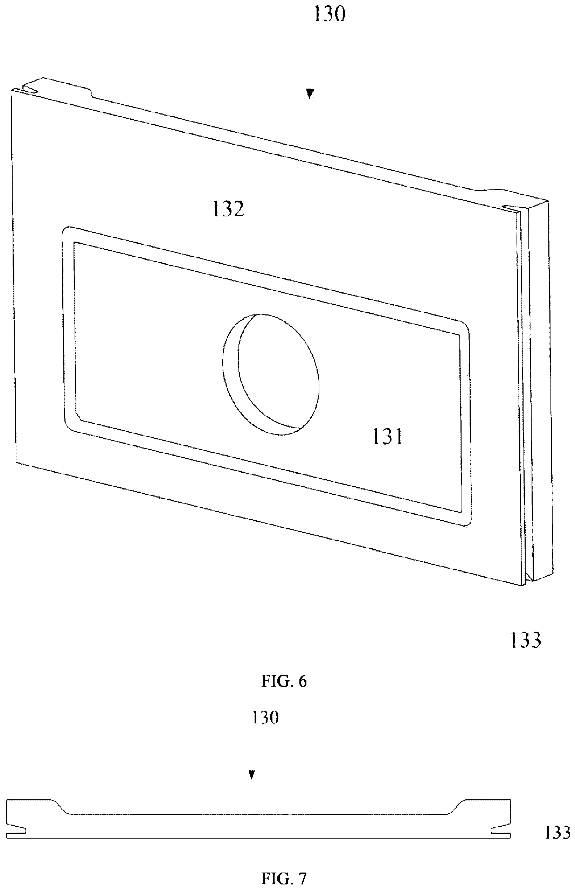

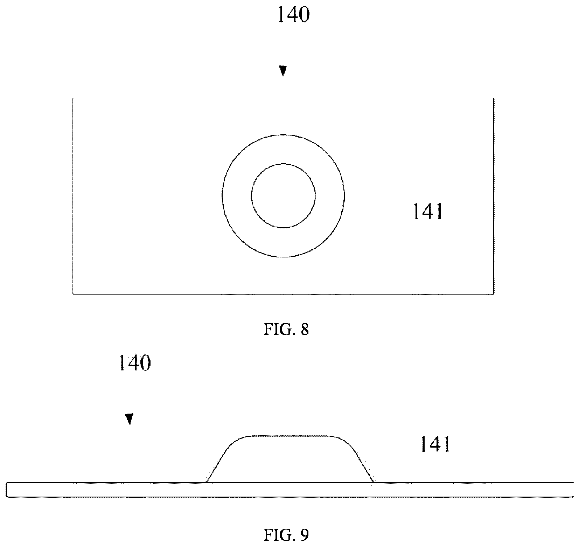

FIG. 1 is a schematic diagram of an overall structure of a battery according to an embodiment of the present invention. FIG. 2 is an exploded view of FIG. 1. FIG. 3 is a side view of FIG. 1. FIG. 4 is a section view taken along line A-A of FIG. 3. FIG. 5 is an enlarged view of portion B in FIG. 4. FIG. 6 is a schematic diagram of an overall structure of an insulating member in a battery according to an embodiment of the present invention. FIG. 7 is a side view of FIG. 6. FIG. 8 is a schematic diagram of a connecting sheet in a battery according to an embodiment of the present invention. FIG. 9 is a side view of FIG. 8. Referring to FIG. 1 to FIG. 9, an embodiment of the present invention provides a battery 100. The battery 100 includes a battery cell 110, a housing 120, an insulating member 130, and a connecting sheet 140. The housing 120 is provided with an accommodating cavity, and the battery cell 110 is disposed in the accommodating cavity. A side wall of the housing 120 is provided with a notch 121, the insulating member 130 is mounted at the notch 121, and the insulating member 130 is provided with a mounting hole 131. The connecting sheet 140 is disposed on the insulating member 130 and is provided with a protruding portion 141. The protruding portion 141 penetrates through the mounting hole 131 and extends to the inside of the housing 120, and the protruding portion 141 is electrically connected to a tab assembly 111 of the battery cell 110.

The battery cell 110 includes a negative electrode made of a negative electrode material, a positive electrode made of a positive electrode material, and a separator for separating the positive electrode from the negative electrode. The battery cell 110 may be disposed in a wound type, a laminated type, etc., which is not specifically limited in this embodiment.

It should be noted that the function of the housing 120 is to protect the battery cell 110 therein. The housing 120 may be formed by splicing two parts to facilitate installation. The housing 120 may be made of stainless steel, aluminum alloy, etc., which is sturdy and corrosion-resistant. Of course, the housing 120 may also be made of other materials, which is not specifically limited in this embodiment.

The housing 120 may be a metal housing, and the insulating member 130 may be made of resin, plastic, etc. The main function of the insulating member 130 is to isolate the housing 120 from the connecting sheet 140 to prevent electrical contact between the housing 120 and the connecting sheet 140. The insulating member 130 is disposed at the notch 121 to replace a portion of the original housing 120 at the notch 121. The size and shape of the insulating member 130 may be matched with the size and shape of the notch 121. Specifically, the notch 121 may be rectangular in shape.

The connecting sheet 140 is generally made of a material with good electrical conductivity, such as copper, aluminum, etc. The protruding portion 141 on the connecting sheet 140 may be formed in advance by a stamping and forming technology, and then the connecting sheet 140 is mounted at the mounting hole 131 on the insulating member 130 for assembling. Alternatively, the connecting sheet 140 may cover the mounting hole 131 first, and then the protruding portion 141 is formed on the connecting sheet 140 by stamping. With this arrangement, on one hand, a tight combination between the protruding portion 141 and the mounting hole 131 can be ensured, and on the other hand, a length of the protruding portion 141 may be conveniently controlled.

The mounting hole 131 may be generally formed in a geometric center of the insulating member 130, so that a distance between an edge of the connecting sheet 140 and an edge of the insulating member 130 is relatively uniform as much as possible to ensure an insulating effect of the insulating member 130.

According to the battery 100 provided by the embodiment of the present invention, the notch 121 is formed in the side wall of the housing 120, and the insulating member 130 is directly disposed at the notch 121. In this way, the insulating member 130 in the embodiment of the present application can not only act as a part of the housing 120 to play the role of protection and support, but also play the role of isolating the connecting sheet 140 from the housing 120. The mounting hole 131 is then formed in the insulating member 130, and the connecting sheet 140 is disposed on the insulating member 130. The connecting sheet 140 is provided with the protruding part 141, and the protruding part 141 penetrates through the mounting hole 131 and extends to inside of the housing 120. The connecting sheet 140 is electrically connected with the tab assembly 111. With this arrangement, the insulating member 130 and the connecting sheet 140 occupy a small part of the internal space of the housing 120, leaving a large space for the setting of the battery cell 110. Therefore, capacity density of the battery 100 is improved without changing the overall size of the battery 100.

In the above embodiment, a side of the insulating member 130 away from the housing 120 is provided with the mounting groove 132. The mounting hole 131 may be formed at the bottom of the mounting groove 132, the connecting sheet 140 may be disposed in the mounting groove 132, and the connecting sheet 140 may cover the mounting hole 131. It is sufficient to make a depth of the mounting groove 132 comparable to a thickness of the connecting sheet 140. By disposing the connecting sheet 140 in the mounting groove 132, on the one hand, the structure of the battery 100 may be more compact, and the overall stability of the battery 100 may be increased; on the other hand, the connecting sheet 140 does not need to protrude from the surface of the housing 120, and the overall size of the battery 100 may be further reduced.

In the above embodiment, a shape of the insulating member 130 may be matched with a shape of the notch 121, and the insulating member 130 is clamped at the notch 121.

In the above embodiment, the insulating member 130 and the notch 121 may be mounted together in various ways. For example, edges of both opposite sides of the insulating member 130 are provided with sliding grooves 133, so that the insulating member 130 is clamped into the notch 131 through the sliding grooves 133. Specifically, as shown in FIG. 2, the housing 120 may be of a combined type. The notch 121 is formed on the side wall of one part of the housing 120, and an opening of the notch 121 is a place where the other part of the housing 120 is combined. The insulating member 130 is clamped into the notch 121 from the opening of the notch 121 along the sliding grooves 133. When the two parts of the housing 120 are combined together, the part of the housing 120 without the insulating member 130 may block the opening of the notch 121 to prevent the insulating member 130 from being separated from the notch 121. Designed in this way, the insulating member 130 is not only convenient to be assembled and disassembled, but also may be mounted more firmly.

As shown in FIG. 8, in the above embodiment, a thickness of a central region of the insulating member 130 is less than a thickness of edges of the insulating member 130 where the sliding grooves 133 are provided. The thickness of a portion of the insulating member 130 where the sliding grooves 133 are provided may be thicker than a thickness of the housing 120, so as to ensure that the sliding grooves 133 may be clamped into the edges of the notch 121. It is sufficient to make the thickness of the insulating member 130 between the two sliding grooves 133 comparable to the thickness of the housing 120, so as to ensure that the space occupied by the insulating member 130 may be reduced as much as possible.

In practice, a welding area may be formed between a top of the connecting sheet 140 and a groove wall of the mounting groove 132, and the connecting sheet 140 and the insulating member 130 may be welded together at the welding area.

In the above embodiment, a top surface of the connecting sheet 140 may further not exceed a top surface of the insulating member, so as to reduce the size of the battery 100 as much as possible.

In the above embodiment, the tab assembly 111 may include a tab 1111, and the bottom of the protruding part 141 may abut against the surface of the tab 1111. The tab 1111 after being bent may be attached to the surface of the battery cell 110, the protruding part 141 directly abuts against the surface of the tab 1111 after passing through the mounting hole 131, and then the protruding part 141 and the tab 1111 are welded together. In this way, the structure is compact and the assembly is convenient.

In another embodiment, the tab assembly 111 includes a tab 1111 and an overcurrent protection element 1112. The overcurrent protection element 1112 is connected between the tab 1111 and the protruding part. The overcurrent protection element 1112 is mainly used for preventing the battery 100 from being burnt due to an excessively high current during the charging and discharging processes of the battery 100. Specifically, the overcurrent protection element 1112 generally includes a specific sensor, and the overcurrent protection element 1112 is normally closed. When the sensor detects that the current flowing through the overcurrent protection element 1112 is excessively high, the normally closed switch of the overcurrent protection element 1112 is open. That is, the overcurrent protection element 1112 is in a disconnected state, so that the electrical connection between the tab 1111 and the connecting sheet 140 is cut off. It should be noted that the overcurrent protection element 1112 is generally disposed at a positive tab 1111.

In the above embodiment, the battery cell 110 may also be covered with a packaging housing 150, and the tab 1111 of the battery cell 110 extends out of the packaging housing 150. The battery cell 110 is covered by such inner and outer layers, so as to further prevent the battery 100 from liquid leaking.

In the above embodiment, the tab 1111 is disposed on the battery cell 110. The packaging housing 150 may include a body and a sealing edge extending outwards from an edge of a side of the body. A side of the packaging housing 150 facing the tab 1111 is provided with an opening. The sealing edge is bent in a direction close to the body; and the tab 1111 extends out of the packaging housing 150 from the opening along the bending direction of the sealing edge.

In the above embodiment, a heat dissipation layer may further be disposed between adjacent wall surfaces of the packaging housing 150 and the housing 120. The heat dissipation layer may be a heat dissipation coating adhesive. The heat dissipation adhesive may be coated on the outer wall of the packaging housing 150 to help better heat dissipation of the battery cell 110.

In the above embodiment, the mounting hole 131 may be formed in a circular shape, and accordingly, the protruding portion 141 may be formed in a circular shape, and the circular protruding portion 141 has the advantage of being easy to be machined. Of course, the shape of the mounting hole 131 may also be other shapes, such as square, rectangular, etc. The mounting hole 131 is machined into these non-circular shapes, which may ensure that the protruding portion 141 cannot rotate relative to the mounting hole 131 after being mounted in the mounting hole 131, thereby further improving the stability of the connecting sheet 140.

The battery 100 provided by the embodiments of the present invention includes the battery cell 110, the housing 120, the insulating member 130 and the connecting sheet 140, where the housing 120 is provided with the accommodating cavity, and the battery cell 110 is disposed in the accommodating cavity; the side wall of the housing 120 is provided with the notch 121, the insulating member 130 is mounted at the notch 121, and the insulating member 130 is provided with the mounting hole 131; the connecting sheet 140 is disposed on the insulating member 130 and is provided with the protruding part 141, the protruding part 141 penetrates through the mounting hole 131 and extends to inside of the housing 120, and the protruding part 141 is electrically connected with the tab assembly 111 of the battery cell 110. According to the battery 100 provided by the embodiments of the present invention, the notch 121 is formed in the side wall of the housing 120, and the insulating member 130 is directly disposed at the notch 121. In this way, the insulating member 130 in the embodiments of the present application can not only act as a part of the housing 120 to play the role of protection and support, but also play the role of isolating the connecting sheet 140 from the housing 120. The mounting hole 131 is then formed in the insulating member 130, and the connecting sheet 140 is disposed on the insulating member 130. The connecting sheet 140 is provided with the protruding part 141, and the protruding part 141 penetrates through the mounting hole 131 and extends to inside of the housing 120. The connecting sheet 140 is electrically connected with the tab assembly 111. With this arrangement, the insulating member 130 and the connecting sheet 140 occupy a small part of the internal space of the housing 120, leaving a large space for the setting of the battery cell 110. Therefore, capacity density of the battery 100 is improved without changing the overall size of the battery 100.

In addition, the present invention further provides an electronic device. The electronic device includes any battery 100 in the above embodiments. The battery 100 includes the battery cell 110, the housing 120, the insulating member 130 and the connecting sheet 140, where the housing 120 is provided with the accommodating cavity, and the battery cell 110 is disposed in the accommodating cavity; the side wall of the housing 120 is provided with the notch 121, the insulating member 130 is mounted at the notch 121, and the insulating member 130 is provided with the mounting hole 131; the connecting sheet 140 is disposed on the insulating member 131 and is provided with the protruding part 141, the protruding part 141 penetrates through the mounting hole 131 and extends to inside of the housing 120, and the protruding part 141 is electrically connected with the tab assembly 111 of the battery cell 110. According to the battery 100 provided by the embodiments of the present invention, the notch 121 is formed in the side wall of the housing 120, and the insulating member 130 is directly disposed at the notch 121. In this way, the insulating member 130 in the embodiments of the present application can not only act as a part of the housing 120 to play the role of protection and support, but also play the role of isolating the connecting sheet 140 from the housing 120. The mounting hole 131 is then formed in the insulating member 130, and the connecting sheet 140 is disposed on the insulating member 130. The connecting sheet 140 is provided with the protruding part 141, and the protruding part 141 penetrates through the mounting hole 131 and extends to inside of the housing 120. The protruding part 141 is electrically connected with the tab assembly 111. With this arrangement, the insulating member 130 and the connecting sheet 140 occupy a small part of the internal space of the housing 120, leaving a large space for the setting of the battery cell 110. Therefore, capacity density of the battery 100 is improved without changing the overall size of the battery 100. Since the capacity density of the battery 100 is improved, the limited installation space of the battery 100 in the electronic device provided in these embodiments can accommodate the battery 100 with a larger capacity, so that the endurance of the electronic device can be prolonged.

Finally, it should be noted that the foregoing embodiments are merely intended for describing the technical solutions of the present invention other than limiting the present invention. Although the present invention is described in detail with reference to the foregoing embodiments, those of ordinary skill in the art should understand that they may still make modifications to the technical solutions described in the foregoing embodiments or make equivalent substitutions to some or all of technical features thereof. However, these modifications and substitutions do not make the essence of the corresponding technical solutions deviate from the scope of the technical solutions of embodiments of the present invention.

## Claims

1. A battery, comprising a battery cell, a housing, an insulating member and a connecting sheet, wherein the housing is provided with an accommodating cavity, and the battery cell is disposed in the accommodating cavity; a side wall of the housing is provided with a notch, the insulating member is mounted at the notch, and the insulating member is provided with a mounting hole; the connecting sheet is disposed on the insulating member and is provided with a protruding part, the protruding part penetrates through the mounting hole and extends to inside of the housing, and the protruding part is electrically connected with a tab assembly of the battery cell.

2. The battery according to claim 1, wherein a side of the insulating member away from the housing is provided with a mounting groove, the mounting hole is located at a bottom of the mounting groove, and the connecting sheet is disposed in the mounting groove and covers the mounting hole.

3. The battery according to claim 2, wherein a shape of the insulating member is matched with a shape of the notch, and the insulating member is clamped at the notch.

4. The battery according to claim 3, wherein edges of both opposite sides of the insulating member are provided with sliding grooves, and the insulating member is clamped into the notch through the sliding grooves.

5. The battery according to claim 4, wherein a thickness of a central region of the insulating member is less than a thickness of the edges of the insulating member where the sliding grooves are provided.

6. The battery according to any one of claims 2 to 5, wherein a welding area is formed between a top of the connecting sheet and a groove wall of the mounting groove, and the connecting sheet and the insulating member are welded together at the welding area.

7. The battery according to any one of claims 1 to 5, wherein a top surface of the connecting sheet does not exceed a top surface of the insulating member.

8. The battery according to any one of claims 1 to 5, wherein the tab assembly comprises a tab, and a bottom of the protruding part abuts against a surface of the tab.

9. The battery according to any one of claims 1 to 5, wherein the tab assembly comprises a tab and an overcurrent protection element, and the overcurrent protection element is connected between the tab and the protruding part.

10. The battery according to any one of claims 1 to 5, wherein the battery cell is coated with a packaging housing, and a tab of the battery cell extends out of the packaging housing.

11. The battery according to claim 10, wherein the tab is disposed on the battery cell, the packaging housing comprises a body and a sealing edge extending outwards from an edge of a side of the body, a side of the packaging housing facing the tab is provided with an opening, and the sealing edge is bent in a direction close to the body; the tab extends out of the packaging housing from the opening along a bending direction of the sealing edge.

12. The battery according to claim 11, further comprising a heat dissipation layer, wherein the heat dissipation layer is disposed between adjacent wall surfaces of the packaging housing and the housing.

13. The battery according to any one of claims 1 to 5, wherein the housing is a metal housing, and the insulating member is a plastic member.

14. The battery according to any one of claims 1 to 5, wherein the battery cell is of a wound structure or a laminated structure.

15. The battery according to any one of claims 1 to 5, wherein the notch is rectangular in shape.

16. The battery according to any one of claims 1 to 5, wherein the housing is formed by a combination of two housing parts.

17. The battery according to any one of claims 1 to 5, wherein the mounting hole is circular or rectangular in shape.

18. The battery according to claim 17, wherein the mounting hole is provided at a geometric center of the insulating member.

19. The battery according to claim 12, wherein the heat dissipation layer is a heat dissipation coating adhesive.

20. An electronic device, comprising the battery according to any one of claims 1 to 19.
